# EUROPEAN PATENT SPECIFICATION

(11) **EP 3 021 530 B1**
(45) Date of publication and mention of the grant of the patent: **05.09.2018**
(21) Application number: 14861141.1
(22) Date of filing: 28.05.2014
(51) Int. Cl.: H04L 12/58

(54) **DATA SENDING METHOD AND DEVICE**
DATENSENDEVERFAHREN UND -VORRICHTUNG
PROCÉDÉ ET DISPOSITIF D'ENVOI DE DONNÉES

(43) Date of publication of application: 18.05.2016
(73) Proprietor: Huawei Technologies Co., Ltd., Longgang District Shenzhen, Guangdong 518129 (CN)
(72) Inventor: HUANG, Jiejing, Shenzhen Guangdong 518129 (CN); WU, Huangwei, Shenzhen Guangdong 518129 (CN)
(74) Representative: Thun, Clemens
(86) International application number: PCT/CN2014/078609
(87) International publication number: WO 2015/180051

(56) References cited:
- WO-A1-2013/143414
- WO-A1-2014/025311
- CN-A- 102 710 540
- CN-A- 102 739 560
- CN-A- 103 442 071
- CN-A- 103 491 087
- US-A1- 2006 031 560
- US-A1- 2012 203 850

## Description

### TECHNICAL FIELD

Embodiments of the present invention relate to wireless communications technologies, and in particular, to a data sending method and apparatus.

### BACKGROUND

Rapid development of computer networks greatly changes communication manners of people, and instant messaging (IM) application software appears and gradually becomes a popular and convenient communication manner for interpersonal communication. Instant messaging (IM) integrates transfer of files and multimedia such as audio and videos, network chat, and other services, and opens up a new approach of communication.

In the prior art, in a communication process using IM software, a same type of network transmission, for example, 3G mobile data flows, is used to send both text information and large files such as pictures, audio, and videos. If two terminals between which chat is performed by using IM (for example, the two terminals both use a 3G network) are located within a relatively close area range (for example, a range that Wi-Fi/Bluetooth can cover), in a process of using IM, a mobile terminal cannot automatically enable a wireless network such as Wi-Fi/Bluetooth to conveniently and quickly transfer a large file such as multimedia, and instead, still uses an original wireless network (for example, the 3G network) to carry out the transmission. When bandwidth of the original wireless network is insufficient, transfer of the large file is relatively slow, and file transmission efficiency is relatively low, which affects user experience. Document US 2006/031560 discloses a file transfer initiated from a chat application using an IM protocol, the file transfer using a protocol different from the IM protocol. Document WO 2014/025311 discloses to check by a first terminal upon a triggering condition whether the first and a second terminal could communicate over WIFI by searching the second mobile's IP address in the WLAN.

### SUMMARY

In view of the foregoing defects in the prior art, embodiments of the present invention provide a data sending method and system in independent claims 1, 2 and 6. Further embodiments are disclosed in the dependent claims.

According to the data sending method and system that are provided in the embodiments of the present invention, in a process of communicating, by a first terminal, with a second terminal by using the Internet in an instant messaging manner, if it is determined that communication can be performed by using a first wireless communication network, a wireless communication connection is established between the first terminal and the second terminal based on the first wireless communication network, and data exchange is performed by using the wireless connection. In this way, data exchange is not affected by network bandwidth of the Internet, and thereby a data transmission rate and data transmission efficiency are improved.

### BRIEF DESCRIPTION OF DRAWINGS

FIG. 1 is a flowchart of a first embodiment of a data sending method according to the present invention;
FIG. 2 is a signaling diagram of a second embodiment of a data sending method according to the present invention;
FIG. 3 is a signaling diagram of a third embodiment of a data sending method according to the present invention;
FIG. 4 is a signaling diagram of a fourth embodiment of a data sending method according to the present invention;
FIG. 5 is a schematic structural diagram of an embodiment of a first terminal according to the present invention; and
FIG. 6 is a schematic structural diagram of an embodiment of a terminal device according to the present invention.

### DESCRIPTION OF EMBODIMENTS

When two terminals that are communicating using IM software know that the other party is in a relatively close area, if the two terminals still surf the Internet by using 3G/4G data traffic or other data traffic, transmission of a large file such as multimedia may be limited by network bandwidth, which causes that file transfer is relatively slow and that transmission efficiency is relatively low. With respect to this technical issue, embodiments of the present invention provide a solution. That is, when two terminals use IM to chat and know that the other party is in a relatively close area (for example, within a range that Bluetooth or Wi-Fi can cover), a local area network is established between the two terminals by using a server or by means of device capability negotiation between the two parties. In the local area network, the two parties perform data transmission without using the Internet (the local area network is a Bluetooth network, a Wi-Fi (Wi-Fi direct) network, or the like), and perform point-to-point communication to transmit various to-be-sent data (for example, a large file such as a picture or audio or video multimedia), so that data transmission efficiency can be improved.

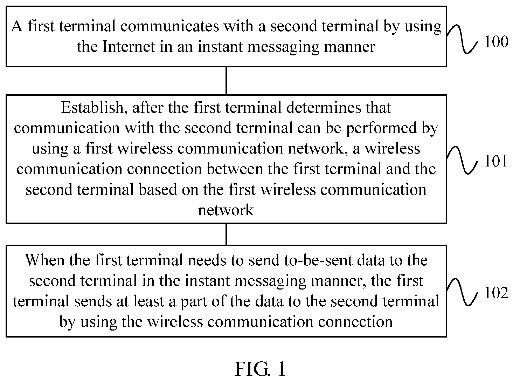

FIG. 1 is a flowchart of a first embodiment of a data sending method according to the present invention; as shown in FIG. 1, the method includes:
Step 100: A first terminal communicates with a second terminal by using the Internet in an instant messaging manner.

The terminal in this embodiment of the present invention may be a mobile terminal, or may be a fixed terminal. The mobile terminal includes but is not limited to a mobile phone, a mobile computer, a tablet computer, a personal digital assistant (Personal Digital Assistant, PDA), a media player, a smart television set, a smart watch, smart glasses, a smart band, and the like.

First, the first terminal and the second terminal perform data exchange by using the Internet in the instant messaging manner, for example, using IM software. In the process, both terminals need to use, for example, 3G/4G Internet access traffic to support ongoing exchange of a text or multimedia file.

Step 101: Establish, after the first terminal determines that communication with the second terminal can be performed by using a first wireless communication network, a wireless communication connection between the first terminal and the second terminal based on the first wireless communication network.

Due to impact of 3G/4G network bandwidth, efficiency of data exchange between the first terminal and the second terminal may be possibly not high, and setting cannot be completed. In this method embodiment of the present invention, the first terminal may regularly or irregularly determine whether data exchange with the second terminal can be performed by using another wireless communication network, and if it is determined that communication with the second terminal can be performed by using, for example, the first wireless communication network, a wireless communication connection may be established between the first terminal and the second terminal based on the first wireless communication network.

In this method embodiment, the determining that communication with the second terminal can be performed by using a first wireless communication network may be: detecting and learning, by the first terminal, that the two parties are located within a relatively close area (for example, a range that Bluetooth or Wi-Fi can cover), and then establishing a wireless communication connection between the first terminal and the second terminal based on the first wireless communication network (for example, a Bluetooth network or a Wi-Fi(Wi-Fi direct) network). The first terminal and the second terminal directly perform data exchange by using the wireless communication connection instead of the Internet. Certainly, in a process of establishing the wireless communication connection, the first terminal and the second terminal may also continue data exchange by using the Internet.

Step 102: When the first terminal needs to send to-be-sent data to the second terminal in the instant messaging manner, the first terminal sends at least a part of the data to the second terminal by using the wireless communication connection.

After the first terminal and the second terminal successfully establish the wireless communication connection based on the first wireless communication network, when the first terminal needs to send to-be-sent data to the second terminal by using IM software, the first terminal may send at least a part of the to-be-sent data to the second terminal by using the newly established wireless communication connection, and the rest is sent by using the Internet; or all the to-be-sent data may be sent to the second terminal by using the newly established wireless communication connection, which is not limited in this embodiment of the present invention.

The to-be-sent data in this method embodiment may be a large multimedia file, such as a picture file or an audio or video file, or may be a text file, such as text or symbol information.

Certainly, this method embodiment may further include that, when the second terminal needs to send to-be-sent data to the first terminal in the instant messaging manner, the second terminal may send at least a part of the data to the first terminal by using the wireless communication connection.

According to the data sending method provided in this embodiment of the present invention, in a process of communicating, by a first terminal, with a second terminal by using the Internet in an instant messaging manner, if it is determined that communication can be performed by using a first wireless communication network, a wireless communication connection is established between the first terminal and the second terminal based on the first wireless communication network, and data exchange is performed by using the wireless connection. In this way, data exchange is not affected by network bandwidth of the Internet, and thereby a data transmission rate and data transmission efficiency are improved, time of file transmission is shortened, and user experience is improved.

In the foregoing method embodiment, the first wireless communication network may be a local area network, including a direct interconnection network that implements direct communication between the first terminal and the second terminal, for example, a Bluetooth network or a Wi-Fi (Wi-Fi direct) network. Using the Wi-Fi network as an example, the direct interconnection network may be a wireless network provided by the first terminal for the second terminal by using the first terminal itself as a Wi-Fi hotspot.

Correspondingly, in the foregoing embodiment, the establishing, after the first terminal determines that communication with the second terminal can be performed by using a first wireless communication network, a wireless communication connection between the first terminal and the second terminal based on the first wireless communication network may include:
receiving, by the first terminal, location information of the second terminal sent by the second terminal, and if it is determined and learned that the second terminal is located within coverage of the first wireless communication network, providing the first wireless communication network for the second terminal and enabling a first wireless communication manner; for example, the first terminal enables a personal hotspot function to provide a Wi-Fi network for the second terminal, and also enables a Wi-Fi function of the first terminal, then instructs the second terminal to also enable the first wireless communication manner, that is, the Wi-Fi function, and establishes the wireless communication connection with the second terminal. The process of establishing the wireless communication connection may be executed according to the prior art, and details are not described herein.

Further, the location information of the second terminal received by the first terminal may be sent to the first terminal after the second terminal detects and learns that a user operation meets a preset trigger condition. The trigger condition includes detecting that a user is to send a file whose file size exceeds a preset threshold, for example, the user clicks a function key of sending a picture, or an audio or video file. After detecting that the user clicks a function key of sending a picture, the second terminal actively sends the location information of the second terminal to the first terminal.

The location information of the second terminal received by the first terminal may also be sent to the first terminal after the second terminal receives a request that is sent by the first terminal and used to acquire the corresponding location information of the second terminal. Specifically, the first terminal actively sends the request for acquiring the location information to the second terminal, and the second terminal obtains the location information of the second terminal according to the request and sends the location information to the first terminal.

In the foregoing method embodiment, the first wireless communication network may also include a local area network, such as a Wi-Fi network, that implements communication between the first terminal and the second terminal via an intermediate node. When both the first terminal and the second terminal are located within Wi-Fi coverage provided by a third party, the first terminal and the second terminal may establish a wireless communication connection by accessing a Wi-Fi network provided by the third party.

Correspondingly, in the foregoing embodiment, the establishing, after the first terminal determines that communication with the second terminal can be performed by using a first wireless communication network, a wireless communication connection between the first terminal and the second terminal based on the first wireless communication network may include:
receiving, by the first terminal, description information of the first wireless communication network sent by the second terminal, where the second terminal is currently located within coverage of the first wireless communication network; and establishing the wireless communication connection with the second terminal if the first terminal determines and learns, according to the description information, that the first terminal is also located within the coverage of the first wireless communication network. Specifically, the second terminal sends description information of a Wi-Fi network in which the second terminal is currently located to the first terminal, and if the first terminal determines and learns, according to the description information, that the first terminal is also located within coverage of the Wi-Fi, the first terminal establishes a Wi-Fi connection with the second terminal.

The following further explains and describes a method embodiment of the present invention with reference to several specific embodiments.

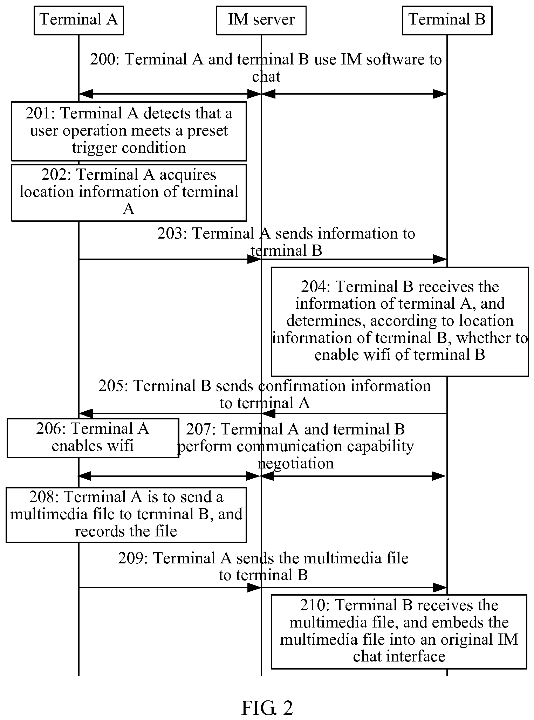

FIG. 2 is a signaling diagram of a second embodiment of a data sending method according to the present invention. As shown in FIG. 2, this method embodiment describes a scenario in which terminal A is used as an access hotspot and provides a Wi-Fi network for terminal B, and the two parties send data based on the Wi-Fi network. This near field communication method includes:
Step 200: Terminal A and terminal B use IM software to chat.

Specifically, terminal A and terminal B exchange, for example, text information by using an IM server.

Step 201: Terminal A detects that a user operation meets a preset trigger condition.

Specifically, terminal A detects an operation that a user clicks to add a large file, such as a picture or an audio or video file, for example, the user clicks an "Add" or "+" button, or detects a loading process after a large file is added, or the like.

Step 202: Terminal A acquires location information of terminal A.

Specifically, terminal A acquires geographic location information on the terminal. There are many solutions for acquiring the location information; for example, the terminal logs in to the IM server, and from the server returns IP address and TCP/UDP port information, and the like; for another example, the geographic location information of the terminal is acquired by GPS, AGPS, Wi-Fi, and other assisting positioning technologies on the terminal.

Step 203: Terminal A sends information to terminal B.

Specifically, terminal A sends the information to terminal B, where the information may include parameters (such as file name, type, and size) of a large file to be sent by terminal A, geographic information of terminal A, a Wi-Fi communications parameter, and the like.

Step 204: Terminal B receives the information of terminal A, and determines, according to location information of terminal B, whether to enable Wi-Fi of terminal B.

Specifically, terminal B receives the information of terminal A and acquires the location information of terminal B; compares the location information of terminal A with that of terminal B, and if it is determined and learned that the two terminals are located within a range in which Wi-Fi communication can be performed if terminal A enables Wi-Fi, terminal B enables Wi-Fi of terminal B.

In this method embodiment, terminal A is used as an access hotspot, and a wireless network connection is established between terminal A and terminal B.

Step 205: Terminal B sends confirmation information to terminal A.

Specifically, terminal B sends the confirmation information to terminal A, where the confirmation information includes notifying terminal A that terminal A and terminal B are in a relatively close area and that terminal B has enabled Wi-Fi, and a Wi-Fi/Bluetooth communications parameter of terminal B.

Step 206: Terminal A enables Wi-Fi.

Specifically, terminal A receives the confirmation information of terminal B, enables Wi-Fi on terminal A, and tries to connect to terminal B according to the communications parameter of terminal B.

Step 207: Terminal A and terminal B perform communication capability negotiation.

Specifically, terminal A and terminal B try to perform pairing and communication capability negotiation (about I/O input/output and other hardware parameters) in a case in which both terminal A and terminal B have enabled Wi-Fi, and this embodiment assumes that terminal A and terminal B can establish a connection successfully.

Step 208: Terminal A is to send a multimedia file to terminal B, and records the file.

Specifically, when terminal A sends a large file such as a picture or an audio or video file to terminal B, terminal A transmits the large file by using an established Wi-Fi channel and embeds the large file into an original IM chat interface.

For example, in Android, invoking Bluetooth may be completed by using android.Bluetooth APIs; if a picture (transmitted by using the Bluetooth protocol) is embedded into text chat (transmitted by using 3G traffic) content, at least three points need to be known in an application program: 1. which picture is transmitted by using Bluetooth; 2. when the transmission begins and when the transmission is complete (to make clear a location at which the received picture is displayed); 3. progress of picture transfer (there is generally progress display, in order to be compatible with current interface display).

Step 209: Terminal A sends the multimedia file to terminal B by using an established wireless connection.

Specifically, terminal A sends the large file to terminal B by using an established Wi-Fi network.

Step 210: Terminal B receives the multimedia file, and embeds the multimedia file into an original IM chat interface.

Specifically, terminal B receives the large file, and embeds the large file into the original IM chat interface by using a relevant API of Wi-Fi.

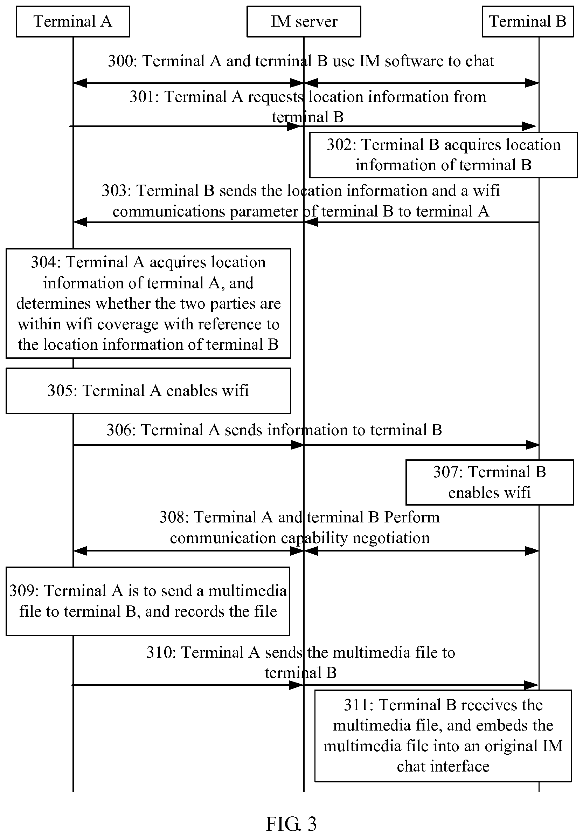

FIG. 3 is a signaling diagram of a third embodiment of a data sending method according to the present invention. As shown in FIG. 3, this method embodiment describes a scenario in which terminal B is used as an access hotspot and provides a Wi-Fi network for terminal A, and the two parties send data based on the Wi-Fi network. This near field communication method includes:
Step 300: Terminal A and terminal B use IM software to chat.

Specifically, terminal A and terminal B exchange, for example, text information by using an IM server.

Step 301: Terminal A requests location information from terminal B.

Specifically, in a process of communicating by using IM, terminal A sends request information to terminal B to request geographic location information of terminal B.

Step 302: Terminal B acquires location information of terminal B.

Specifically, after terminal B receives the request information of terminal A, terminal B acquires the geographic location information of terminal B, and the acquiring manner may be a prior art, and details are not described herein.

Step 303: Terminal B sends the location information and a Wi-Fi communications parameter of terminal B to terminal A.

Specifically, terminal B responds the request information of terminal A and sends response information to terminal A, where the response information includes the geographic location information of terminal B and the Wi-Fi communications parameter of terminal B.

Step 304: Terminal A acquires location information of terminal A, and determines whether the two parties are within Wi-Fi coverage with reference to the location information of terminal B.

Step 305: Terminal A enables Wi-Fi.

Specifically, terminal A receives the response information of terminal B and acquires geographic location information of terminal A; compares the geographic location information of terminal A with that of terminal B to determine whether the two terminals are within a range that Wi-Fi can cover; if the two terminals are within the range that Wi-Fi can cover, terminal A enables Wi-Fi of terminal A.

In this method embodiment, terminal B is used as an access hotspot, and a wireless network connection is established between terminal A and terminal B.

Step 306: Terminal A sends information to terminal B.

Specifically, terminal A sends the information to terminal B, where the information includes notifying terminal B that terminal B and terminal A are in a relatively close area and that terminal A has enabled Wi-Fi, and a Wi-Fi communications parameter of terminal A.

Step 307: Terminal B enables Wi-Fi.

Specifically, Terminal B enables Wi-Fi and tries to connect to terminal A according to the communications parameter of terminal A.

Step 308: Terminal A and terminal B perform communication capability negotiation.

Specifically, terminal A and terminal B try to perform pairing and communication capability negotiation (about I/O input/output and other hardware parameters) in a case in which both terminal A and terminal B have enabled Wi-Fi, and this embodiment assumes that terminal A and terminal B can establish a connection successfully.

Step 309: Terminal A is to send a multimedia file to terminal B, and records the file.

Specifically, when terminal A sends a large file such as a picture or an audio or video file to terminal B, terminal A transmits the large file by using an established Wi-Fi channel and embeds the large file into an original IM chat interface.

Step 310: Terminal A sends the multimedia file to terminal B by using an established wireless connection.

Specifically, terminal A sends the large file to terminal B by using the established Wi-Fi network.

Step 311: Terminal B receives the multimedia file, and embeds the multimedia file into an original IM chat interface.

Specifically, terminal B receives the large file, and embeds the large file into the original IM chat interface by using a relevant API of Wi-Fi.

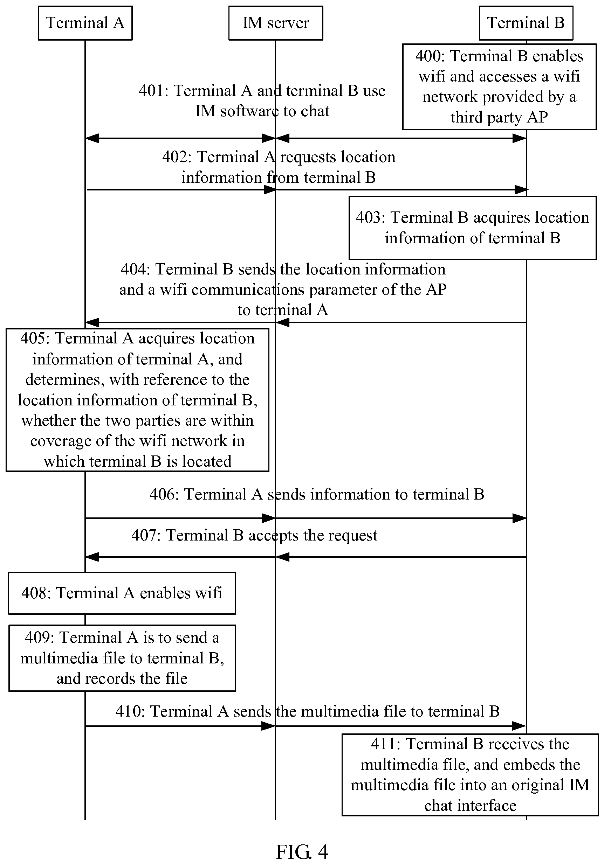

FIG. 4 is a signaling diagram of a fourth embodiment of a data sending method according to the present invention; as shown in FIG. 4, this method embodiment describes a scenario in which terminal A and terminal B send data based on a Wi-Fi network provided by a third party AP. This near field communication method includes:

Step 400: Terminal B enables Wi-Fi and accesses a Wi-Fi network provided by a third party AP.

Step 401: Terminal A and terminal B use IM software to chat.

Specifically, terminal A and terminal B exchange, for example, text information by using an IM server.

Step 402: Terminal A requests location information of the other party from terminal B.

Specifically, in a process of communication using IM, terminal A sends request information to terminal B to request geographic location information of terminal B.

Step 403: Terminal B acquires location information of terminal B.

Specifically, after terminal B receives the request information of terminal A, terminal B acquires the geographic location information of terminal B, and the acquiring manner may be a prior art, and details are not described herein.

Step 404: Terminal B sends the location information and a Wi-Fi communications parameter of the AP to terminal A.

Specifically, terminal B responds the request information of terminal A and sends response information to terminal A, where the response information includes the geographic location information of terminal B and a Wi-Fi communications parameter of the Wi-Fi network in which terminal B is currently located.

Step 405: Terminal A acquires location information of terminal A, and determines, with reference to the location information of terminal B, whether the two parties are within coverage of the Wi-Fi network in which terminal B is located.

Specifically, terminal A receives the response information of terminal B and acquires geographic location information of terminal A; compares the geographic location information of terminal A with that of terminal B, and determines that the two parties are in a same Wi-Fi network according to the Wi-Fi network in which terminal B is located.

In this method embodiment, the Wi-Fi network may be a Wi-Fi network provided by the third party AP, and terminal A and terminal B establish a wireless network connection based on the Wi-Fi network.

Step 406: Terminal A sends information to terminal B.

Specifically, terminal A sends the information to terminal B, where the information includes notifying terminal B that terminal B and terminal A are located within coverage of a same Wi-Fi/Bluetooth network, and requesting terminal B to directly communicate in a local area network.

Step 407: Terminal B accepts the request.

Specifically, terminal B receives the request that is sent by terminal A for communicating in the local area network, and agrees that the two parties communicate in the local area network.

Step 408: Terminal A enables Wi-Fi.

After terminal A enables Wi-Fi, terminal A accesses the Wi-Fi network provided by the third party AP; then, terminal A and terminal B are both located in the same Wi-Fi network, and establish a wireless communication connection based on the Wi-Fi network.

Step 409: Terminal A is to send a multimedia file to terminal B, and records the file.

Specifically, when terminal A sends a large file such as a picture or an audio or video file to terminal B, terminal A transmits the large file by using an established Wi-Fi channel and embeds the large file into an original IM chat interface.

Step 410: Terminal A sends the multimedia file to terminal B by using an established wireless connection.

Specifically, terminal A sends the large file to terminal B by using the established Wi-Fi network.

Step 411: Terminal B receives the multimedia file, and embeds the multimedia file into an original IM chat interface.

Specifically, terminal B receives the large file, and embeds the large file into the original IM chat interface by using a relevant API of Wi-Fi.

In the method embodiments of the present invention, a terminal can intelligently and automatically enable Wi-Fi/Bluetooth, the two parties of communication know that the other party is in a near-field area (within a range that Wi-Fi/Bluetooth can cover), and the terminals may automatically enable Wi-Fi/Bluetooth without manual participation to implement direct interconnection of devices and directly transmit a file, which improves the rate and efficiency of file transmission and enhances user experience.

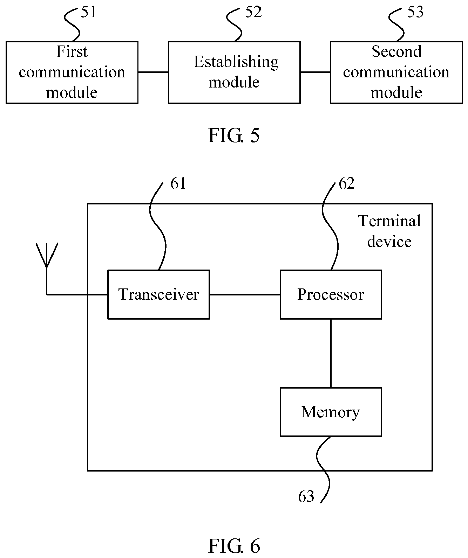

FIG. 5 is a schematic structural diagram of an embodiment of a first terminal according to the present invention. As shown in FIG. 5, the first terminal includes a first communication module 51, an establishing module 52, and a second communication module 53, where the first communication module 51 is configured to communicate with the second terminal by using the Internet in an instant messaging manner; the establishing module 52 is configured to establish, after it is determined that communication with the second terminal can be performed by using a first wireless communication network, a wireless communication connection between the first terminal and the second terminal based on the first wireless communication network; and the second communication module 53 is configured to send, by the first terminal when to-be-sent data needs to be sent to the second terminal in the instant messaging manner, at least a part of the data to the second terminal by using the wireless communication connection.

Specifically, by using the first communication module 51, the first terminal performs text chat with the second terminal by using IM software. In the process, if the establishing module 52 determines and learns that communication between the first terminal and the second terminal can be performed by using the first wireless communication network, for example, when both the two terminals are located within coverage of a same Wi-Fi network, a wireless communication connection is established between the two terminals based on the first wireless communication network. After the establishing module 52 establishes the wireless communication connection, when to-be-sent data needs to be sent to the second terminal in the instant messaging manner, by using the second communication module 53, at least a part of the data is sent to the second terminal by using the wireless communication connection.

Further, the first wireless communication network includes a direct interconnection network that implements direct communication between the first terminal and the second terminal. Correspondingly, the establishing module 52 includes:
a first unit, configured to receive location information of the second terminal sent by the second terminal, and if it is determined and learned that the second terminal is located within coverage of the first wireless communication network, providing the first wireless communication network for the second terminal and enabling a first wireless communication manner; and
a second unit, configured to instruct the second terminal to enable the first wireless communication manner, and establish the wireless communication connection with the second terminal.

The location information of the second terminal received by the first terminal may be sent to the first terminal after the second terminal detects and learns that a user operation meets a preset trigger condition; and the trigger condition includes detecting that a user is to send a file whose file size exceeds a preset threshold, for example, a large picture, audio, or video file.

The location information of the second terminal received by the first terminal may also be sent to the first terminal after the second terminal receives a request that is sent by the first terminal and used to acquire the corresponding location information of the second terminal.

Furthermore, the first wireless communication network is a local area network, including a local area network that implements communication between the first terminal and the second terminal via an intermediate node. Correspondingly, the establishing module 52 includes:
a third unit, configured to receive description information of the first wireless communication network sent by the second terminal, where the second terminal is currently located within coverage of the first wireless communication network; and
a fourth unit, configured to establish the wireless communication connection with the second terminal if it is determined and learned, according to the description information, that the first terminal is also located within the coverage of the first wireless communication network.

The first terminal provided in this apparatus embodiment may be configured to execute an operational process of the foregoing method embodiments, and details are not described herein again.

In a process of communicating, by the first terminal provided in this embodiment of the present invention, with a second terminal by using the Internet in an instant messaging manner, if it is determined that communication can be performed by using a first wireless communication network, a wireless communication connection is established between the first terminal and the second terminal based on the first wireless communication network, and data exchange is performed by using the wireless connection. In this way, data exchange is not affected by network bandwidth of the Internet, and thereby a data transmission rate and data transmission efficiency are improved, and user experience is improved.

FIG. 6 is a schematic structural diagram of an embodiment of a terminal device according to the present invention; as shown in FIG. 6, the terminal device includes a transceiver 61 and a processor 62. Specifically, the transceiver 61 is configured to communicate with a second terminal by using the Internet in an instant messaging manner. The processor 62 is configured to establish a wireless communication connection between the terminal device and the second terminal based on a first wireless communication network after it is determined that communication with the second terminal can be performed by using the first wireless communication network; and control, when to-be-sent data needs to be sent to the second terminal in the instant messaging manner, the transceiver 61 to send at least a part of the data to the second terminal by using the wireless communication connection.

The first wireless communication network is a local area network, including a direct interconnection network that implements direct communication between the terminal device and the second terminal, or a local area network that implements communication between the terminal device and the second terminal via an intermediate node.

The terminal device may further include a memory 63, which is configured to cache to-be-sent data and received data.

In a process of communicating, by the terminal device provided in this embodiment of the present invention, with a second terminal by using the Internet in an instant messaging manner, if it is determined that communication can be performed by using a first wireless communication network, a wireless communication connection is established between the terminal device and the second terminal based on the first wireless communication network, and data exchange is performed by using the wireless connection. In this way, data exchange is not affected by network bandwidth of the Internet, and thereby a data transmission rate and data transmission efficiency are improved, and time of file transmission is shortened.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data sending method, comprising:
communicating, by a first terminal, with a second terminal by using the Internet in an instant messaging manner (S100);
receiving, by the first terminal, location information of the second terminal sent by the second terminal after the second terminal detects and learns that a user operation meets a preset trigger condition;
and if it is determined and learned by the first terminal that the second terminal is located within coverage of the first wireless communication network, providing, by the first terminal, the first wireless communication network for the second terminal and enabling a first wireless communication manner;
instructing, by the first terminal, the second terminal to enable the first wireless communication manner, and establishing the wireless communication connection with the second terminal (S101); and
when the first terminal needs to send to-be-sent data to the second terminal in the instant messaging manner, sending, by the first terminal, at least a part of the data to the second terminal by using the wireless communication connection (S102).

2. A data sending method, comprising:
communicating, by a first terminal, with a second terminal by using the Internet in an instant messaging manner (S100);
receiving, by the first terminal, location information of the second terminal sent by the second terminal after the second terminal receives a request that is sent by the first terminal and used to acquire the corresponding location information of the second terminal;
and if it is determined and learned by the first terminal that the second terminal is located within coverage of the first wireless communication network, providing, by the first terminal, the first wireless communication network for the second terminal and enabling a first wireless communication manner;
instructing, by the first terminal, the second terminal to enable the first wireless communication manner, and establishing the wireless communication connection with the second terminal (S101); and
when the first terminal needs to send to-be-sent data to the second terminal in the instant messaging manner, sending, by the first terminal, at least a part of the data to the second terminal by using the wireless communication connection (S102).

3. The method according to claim 1 or 2, wherein the first wireless communication network is a local area network, comprising a direct interconnection network that implements direct communication between the first terminal and the second terminal.

4. The method according to claim 1, wherein the trigger condition comprises detecting that a user is to send a file whose file size exceeds a preset threshold.

5. The method according to any one of claims 1 to 4, further comprising:
when the second terminal needs to send to-be-sent data to the first terminal in the instant messaging manner, sending, by the second terminal, at least a part of the data to the first terminal by using the wireless communication connection.

6. A system comprising a first terminal, a second terminal and a first wireless communication network configured to perform any of the methods according to claims 1 - 5.

## Patentansprüche

1. Datensendeverfahren, umfassend:
Kommunizieren mit einem zweiten Endgerät durch ein erstes Endgerät unter Verwendung des Internets auf eine "Instant Messaging"-Weise (S100);
Empfangen von Ortsinformationen des zweiten Endgeräts, die durch das zweite Endgerät gesendet werden, durch das erste Endgerät, nachdem das zweite Endgerät detektiert und erfährt, dass eine Benutzeroperation eine voreingestellte Triggerbedingung erfüllt;
und wenn durch das erste Endgerät bestimmt und erfahren wird, dass sich das zweite Endgerät innerhalb der Abdeckung des ersten drahtlosen Kommunikationsnetzes befindet, Bereitstellen des ersten drahtlosen Kommunikationsnetzes durch das erste Endgerät für das zweite Endgerät und Freigeben einer ersten drahtlosen Kommunikationsweise;
Anweisen des zweiten Endgeräts durch das erste Endgerät, die erste drahtlose Kommunikationsweise freizugeben, und Herstellen der drahtlosen Kommunikationsverbindung mit dem zweiten Endgerät (S101); und
wenn das erste Endgerät zu sendende Daten auf die "Instant Messaging"-Weise zu dem zweiten Endgerät senden muss, Senden mindestens eines Teils der Daten zu dem zweiten Endgerät durch das erste Endgerät unter Verwendung der drahtlosen Kommunikationsverbindung (S102).

2. Datensendeverfahren, umfassend:
Kommunizieren mit einem zweiten Endgerät durch ein erstes Endgerät durch Verwendung des Internets auf eine "Instant Messaging"-Weise (S100);
Empfangen von Ortsinformationen des zweiten Endgeräts, die durch das zweite Endgerät gesendet werden, durch das erste Endgerät, nachdem das zweite Endgerät eine Anforderung empfängt, die durch das erste Endgerät gesendet wird und zum Beschaffen der entsprechenden Ortsinformationen des zweiten Endgeräts verwendet werden;
und wenn durch das erste Endgerät bestimmt und erfahren wird, dass sich das zweite Endgerät innerhalb der Abdeckung des ersten drahtlosen Kommunikationsnetzes befindet, Bereitstellen des ersten drahtlosen Kommunikationsnetzes durch das erste Endgerät für das zweite Endgerät und Freigeben einer ersten drahtlosen Kommunikationsweise;
Anweisen des zweiten Endgeräts durch das erste Endgerät, die erste drahtlose Kommunikationsweise freizugeben, und Herstellen der drahtlosen Kommunikationsverbindung mit dem zweiten Endgerät (S101); und
wenn das erste Endgerät zu sendende Daten auf die "Instant Messaging"-Weise zu dem zweiten Endgerät senden muss, Senden mindestens eines Teils der Daten zu dem zweiten Endgerät durch das erste Endgerät durch Verwendung der drahtlosen Kommunikationsverbindung (S102).

3. Verfahren nach Anspruch 1 oder 2, wobei das erste drahtlose Kommunikationsnetz ein lokales Netzwerk ist, das ein Direktverbindungsnetzwerk umfasst, das direkte Kommunikation zwischen dem ersten Endgerät und dem zweiten Endgerät implementiert.

4. Verfahren nach Anspruch 1, wobei die Triggerbedingung Detektieren umfasst, dass ein Benutzer eine Datei senden soll, deren Dateigröße eine voreingestellte Schwelle übersteigt.

5. Verfahren nach einem der Ansprüche 1 bis 4, ferner umfassend:
wenn das zweite Endgerät zu sendende Daten auf die "Instant Messaging"-Weise zu dem ersten Endgerät senden muss, Senden mindestens eines Teils der Daten zu dem ersten Endgerät durch das zweite Endgerät durch Verwendung der drahtlosen Kommunikationsverbindung.

6. System, das ein erstes Endgerät, ein zweites Endgerät und ein erstes drahtloses Kommunikationsnetz umfasst, das dafür ausgelegt ist, beliebige der Verfahren nach Anspruch 1 - 5 auszuführen.

## Revendications

1. Procédé d'envoi de données, comportant les étapes consistant à :
faire communiquer un premier terminal avec un deuxième terminal en utilisant l'Internet par une méthode de messagerie instantanée (S100) ;
faire recevoir, par le premier terminal, des informations de localisation du deuxième terminal émises par le deuxième terminal après que le deuxième terminal a détecté et appris qu'une opération d'utilisateur satisfait une condition de déclenchement prédéfinie ; et
s'il est déterminé et appris par le premier terminal que le deuxième terminal est situé dans la zone de couverture du premier réseau de communication sans fil, faire mettre, par le premier terminal, le premier réseau de communication sans fil à la disposition du deuxième terminal et activer une première méthode de communication sans fil ;
faire donner comme instruction, par le premier terminal, au deuxième terminal d'activer la première méthode de communication sans fil, et établir la liaison de communication sans fil avec le deuxième terminal (S101) ; et
lorsque le premier terminal doit envoyer des données à envoyer au deuxième terminal par la méthode de messagerie instantanée, faire envoyer, par le premier terminal, au moins une partie des données au deuxième terminal en utilisant la liaison de communication sans fil (S102).

2. Procédé d'envoi de données, comportant les étapes consistant à :
faire communiquer un premier terminal avec un deuxième terminal en utilisant l'Internet par une méthode de messagerie instantanée (S100) ;
faire recevoir, par le premier terminal, des informations de localisation du deuxième terminal émises par le deuxième terminal après que le deuxième terminal a reçu une demande qui est émise par le premier terminal et utilisée pour acquérir les informations de localisation correspondantes du deuxième terminal ; et
s'il est déterminé et appris par le premier terminal que le deuxième terminal est situé dans la zone de couverture du premier réseau de communication sans fil, faire mettre, par le premier terminal, le premier réseau de communication sans fil à la disposition du deuxième terminal et activer une première méthode de communication sans fil ;
faire donner comme instruction, par le premier terminal, au deuxième terminal d'activer la première méthode de communication sans fil, et établir la liaison de communication sans fil avec le deuxième terminal (S101) ; et
lorsque le premier terminal doit envoyer des données à envoyer au deuxième terminal par la méthode de messagerie instantanée, faire envoyer, par le premier terminal, au moins une partie des données au deuxième terminal en utilisant la liaison de communication sans fil (S102).

3. Procédé selon la revendication 1 ou 2, le premier réseau de communication sans fil étant un réseau local, comportant un réseau d'interconnexion directe qui réalise une communication directe entre le premier terminal et le deuxième terminal.

4. Procédé selon la revendication 1, la condition de déclenchement comportant la détection du fait qu'un utilisateur s'apprête à envoyer un fichier dont la taille de fichier dépasse un seuil prédéfini.

5. Procédé selon l'une quelconque des revendications 1 à 4, comportant en outre :
lorsque le deuxième terminal doit envoyer des données à envoyer au premier terminal par la méthode de messagerie instantanée, faire envoyer, par le deuxième terminal, au moins une partie des données au premier terminal en utilisant la liaison de communication sans fil.

6. Système comportant un premier terminal, un deuxième terminal et un premier réseau de communication sans fil, configuré pour réaliser l'un quelconque des procédés selon les revendications 1 à 5.
